# EUROPÄISCHE PATENTSCHRIFT

(11) **EP 0 481 092 B1**
(45) Veröffentlichungstag und Bekanntmachung des Hinweises auf die Patenterteilung: **26.02.1997**
(21) Anmeldenummer: 91908650.4
(22) Anmeldetag: 01.05.1991
(51) Int. Cl.: D04H 1/54, D04H 5/04

(54) **DEHNBARER VLIESSTOFF AUS POLYOLEFINEN UND SEINE HERSTELLUNG**
STRETCHABLE NONWOVEN POLYOLEFIN FABRIC AND PRODUCTION THEREOF
TISSU DE POLYOLEFINE NON TISSE ETIRABLE ET PRODUCTION D'UN TEL TISSU

(30) Priorität: 01.05.1990 JP 111848/90
(43) Veröffentlichungstag der Anmeldung: 22.04.1992
(73) Patentinhaber: UNICHARM CO. LTD, Kawanoe-shi, 799-01 (JP); CHISSO CORPORATION, Osaka-shi Osaka 530 (JP)
(72) Erfinder: NAKAJIMA, Takayoshi, 952-30, Yasu, Yasu-guShiga 520-23 (JP); YOKOTA, Seiji, 4-9-13, Yoshimi 7-chome, Shiga 524 (JP)
(74) Vertreter: Sperling, Rüdiger, Dipl.-Ing.
(86) Internationale Anmeldenummer: JP9100594
(87) Internationale Veröffentlichungsnummer: WO9117296

(56) Entgegenhaltungen:
- EP-A- 0 313 839
- EP-A- 0 423 395
- FR-A- 2 588 286
- JP-A- 1 148 859
- JP-A- 2 191 757
- JP-A- 2 221 450
- JP-A- 6 134 268
- JP-A-58 169 560
- JP-A-58 174 668
- US-A- 4 551 378
- PATENT ABSTRACTS OF JAPAN vol. 14, no. 470 (C-769)15. Januar 1990 & JP-A-2 191 757 (DAIWABO CO. LTD.) 27. Juli 1990

## Beschreibung

### DER ERFINDUNG ZUGRUNDELIEGENDER STAND DER TECHNIK

Die vorliegende Erfindung betrifft einen elastischen Polyolefinvliesstoff, der nicht nur eine hervorragende, durch seinen hohen elastischen Rückformungsgrad der Ausdehnung verstärkte Elastizität aufweist, sondern auch vom Griff her sowohl für die Verwendung als Verband als auch als Grundgewebe für ein Kataplasma oder ähnliches geeignet ist.

Gewöhnlich wurden bisher elastische Vliesstoffe mittels verschiedener Verfahren hergestellt, wie etwa durch solche, die thermoplastische Polyurethanfasern verwenden (japanisches Amtsblatt zur Veröffentlichung von Patentanmeldungen Nr. 1984-157362) und auf der Warmhaftfähigkeit von Polyesterfasern mit hohem Kräuselgrad mit Bindefasern des Heißschmelztyps basieren (japanisches Amtsblatt zur Veröffentlichung von Patentanmeldungen Nr. 1987-177269). Der aus Polyurethanfasern gebildete Vliesstoff hat jedoch den Nachteil eines gummiähnlichen, klebrigen Griffs und eines überaus hohen spezifischen Gewichts, während der aus Polyesterfasern hergestellte Vliesstoff den Nachteil eines äußerst harten Griffs hat.

Aus der FR-A-2 588 286 ist zwar bekannt Polyfinfasern zur Herstellung elastischer Vliesstoffe zu verwenden, jedoch lassen sich ist durch die alleinige Verwendung von Polyfinfasern die gewünschten, oben angegebene Eigenschaften nicht erzielen.

Es ist Aufgabe der vorliegenden Erfindung, einen Vliesstoff aufzuzeigen, der dahingehend verbessert ist, daß er eine hohe, durch einen hohen elastischen Rückformungsgrad der Ausdehnung verstärkte Elastizität aufweist sowie einen hervorragenden Griff, so daß die vorstehend genannten Nachteile des Standes der Technik nicht auftreten.

### BESCHREIBUNG DER ERFINDUNG

Nach der Untersuchung verschiedener Aspekte kamen die Erfinder zu der Schlußfolgerung, daß neben der Tatsache, daß ein Faserflor durch intensives Kräuseln von Polyolefin-Verbundfasern als hochkräuselbarer und warmverschweißbarer Hauptfaserkomponente des Faserflors elastisch gemacht wird, und der Umwandlung des Faserflors in einen Vliesstoff mittels Warmschweißen, die Warmschweißpunkte nur innerhalb jeweiliger imaginärer Stellen geformt sein dürfen, die eher dünn über den gesamten Vliesstoff verteilt sind, anstatt daß sie gleichmäßig und dicht verteilt sind, um die vorstehend aufgeführte Aufgabe der vorliegenden Erfindung zu lösen.

Die vorliegende Erfindung wird nachfolgend im einzelnen erläutert.

Dem Vliesstoff gemäß der vorliegenden Erfindung liegt ein bekannter elastischer Polyolefinvliesstoff zugrunde, der unabhängig aus Polyolefinverbundfasern mit hohem Kräuselgrad und Warmschweißbarkeit oder aus derartigen Fasern im Gemisch mit anderen organischen Fasern, wobei die Verbundfasern in einem Anteil von wenigstens 30 Gewichtsprozent enthalten sind, zusammengesetzt ist, wobei die Verbundfasern eine dreidimensionale Kräuselung entwickelt haben und einer Warmschweißbehandlung zur Bildung eines Vliesstoffes unterzogen wurden. An den warmverschweißten Punkten sind die Verbundfasern fest miteinander verschweißt und, falls die Verbundfaser auch mit einer anderen organischen Faser in Berührung steht, wird sie auch mit dieser organischen Faser verschweißt. Das Gefüge des Vliesstoffes wird durch die Bildung einer Vielzahl von Warmschweißpunkten gefestigt. (Es sei angemerkt, daß der hier verwendete Begriff "Warmschweißpunkte" nicht nur zählbare warmverschweißte Stellen bezeichnet, sondern auch den Begriff einer kleineren oder größeren verschweißten Fläche beinhaltet, die einen Verschweißungseffekt beeinflußt). Einzelheiten des Gefüges, der Komponenten und der organischen Fasern, die die verschweißbare Polyolefinverbundfaser mit hohem Kräuselgrad bilden, werden weiter unten beschrieben.

Eines der wichtigsten Merkmale der vorliegenden Erfindung liegt darin, daß die warmverschweißten Punkte, die praktisch aus dem Faserflor den Vliesstoff bilden und den Vliesstoff stabilisieren, nur innerhalb der Bereiche des Vliesstoffes gebildet werden, die der Vielzahl von imaginären, über die gesamte Oberfläche des Vliesstoffes in einer später zu beschreibenden Weise verteilten Stellen entsprechen. Die über die Oberfläche des Vliesstoffes verteilten Stellen (die nicht besonders gekennzeichnet sind) haben eine jeweilige Fläche in einem Bereich von 0,007 cm² bis 0,8 cm² und bedecken eine Gesamtfläche von 10 bis 40% der Fläche des gesamten Vliesstoffes. Die von den jeweiligen Stellen gebildeten Bereiche des Vliesstoffes (im folgenden manchmal als "warmverschweißte Zonen" bezeichnet) entsprechen im wesentlichen den Bereichen des Vliesstoffes, die von jeweiligen imaginären Zylindern, die die jeweiligen Punkte umfassen, umgeben sind. Vorzugsweise sind die warmverschweißten Zonen des Vliesstoffes so gleichmäßig wie möglich über den Vliesstoff verteilt. Eine Gesamtfläche der Punkte von weniger als 10% der Fläche des gesamten Vliesstoffes würde zu einer verringerten Haftfestigkeit führen, die einer wiederholten Ausdehnung und Kontraktion nicht widerstehen könnte, während eine 40% übersteigende Gesamtfläche einen harten Griff und schlechte Elastizität zur Folge hätte. Das Gewicht pro Flächeneinheit des Vliesstoffes liegt vorzugsweise in einem Bereich von 10 bis 200 g/m². Auch wenn die Gesamtfläche der Punkte wie vorstehend erwähnt in einem Bereich von 10 bis 40% der Fläche des Vliesstoffes liegt, würde ein Gewicht von weniger als 10 g/m² die Elastizität oder den elastischen Rückformungsgrad der Ausdehnung des Vliesstoffes verringern, während ein Gewicht von mehr als 200 g/m² oftmals zu einem harten Griff führen könnte. Wie bereits beschrieben wurde, sind die wirksamen warmverschweißten Punkte im wesentlichen nur innerhalb der warmverschweißten Zonen des gemäß der Lehre der vorliegenden Erfindung aufgebauten Vliesstoffes gebildet. Genauer gesagt hat der erfindungsgemäße Vliesstoff die Struktur eines von Inseln durchbrochenen Meeres, in der die von den konzentrierten warmverschweißten Punkten gebildeten Faserflorinseln im Meer des Faserflors verteilt sind, das durch die Verbundfasern gebildet wird, die eine dreidimensionale Kräuselung entwickelt haben und dadurch miteinander verschlungen wurden, aber keine warmverschweißten Punkte enthalten, die die Bildung des Vliesstoffes aus dem Faserflor bewirken. Es ist dieses spezielle Gefüge, durch das der Vliesstoff gemäß der vorliegenden Erfindung mit einzigartig angenehmen Griff und hervorragender Elastizität erzielt wird.

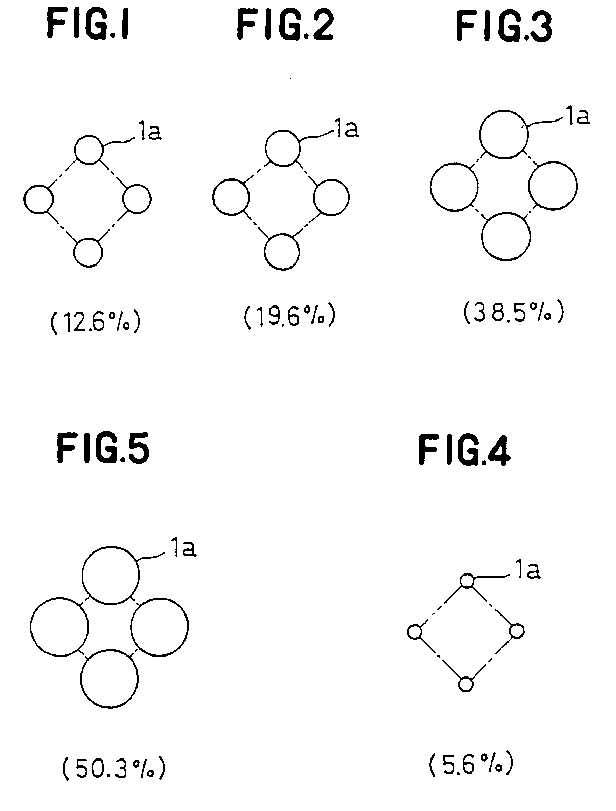

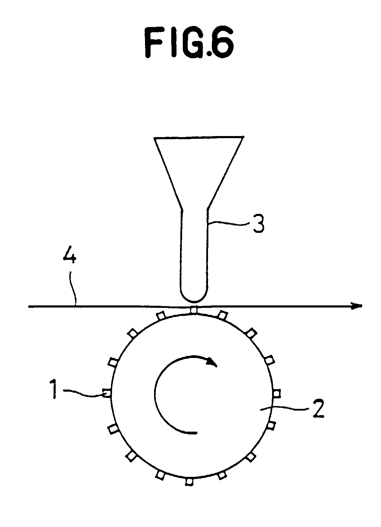

Nachfolgend wird ein Verfahren zur Herstellung des vorstehend beschriebenen Vliesstoffes unter Bezug auf die beiliegende Zeichnung beschrieben, wobei Fig. 1 bis 5 jeweils als Beispiel verschiedene Verteilungen von Stempeln an Formwerkzeugen zur Herstellung von Vliesstoffen zeigen und Fig. 6 eine schematische Darstellung zur Erläuterung der Bildung des Vliesstoffes unter Verwendung einer Ultraschallschweißvorrichtung.

Verschweißbare und hoch kräuselbare Polyolefinfasern als Hauptwerkstoff des Vliesstoffes entsprechen offensichtlich in Aufbau und Komponenten dem Vliesstoff, mit der Ausnahme, daß in diesem Werkstoff weder eine Kräuselung noch warmverschweißte Punkte vorhanden sind. Das Verfahren beginnt mit der Herstellung des Faserflors, der unabhängig aus derartigen Polyolefinverbundfasern mit hoher Kräuselbarkeit und Warmverschweißbarkeit oder aus derartigen Fasern im Gemisch mit anderen organischen Fasern, wobei die Verbundfasern zu mindestens 30 Gewichtsprozent enthalten sind, zusammengesetzt ist. Der Faserflor kann durch bekannte Verfahren, die beispielsweise eine Karde, eine Luftstrom-Wirrfaserflorbildemaschine oder ähnliches verwenden, gebildet werden. Der Faserflor kann auch in Form eines kreuzweisen Flors unter Verwendung eines Kreuzlegers hergestellt werden. Der hierin verwendete Begriff "hoch kräuselbar" bedeutet, daß, nachdem der aus nicht erwärmten Verbundfasern bestehende Faserflor (mit einem Gewicht von 8 bis 160 g/m²) auf eine Temperatur erwärmt wurde, die um 10°C unter dem Schmelzpunkt der Komponente mit niedrigem Schmelzpunkt liegt und die dreidimensionale Kräuselung entwickelt wurde, der Faserflor eine Warmschrumpfungsrate von 20% oder mehr zeigt (das genaue Verfahren zur Messung wird weiter unten erläutert). Entsprechend kann zum Erhalten des Vliesstoffes mit dem gewünschten Gewicht pro Flächeneinheit, gemessen nach der Entwicklung der dreidimensionalen Kräuselung, das Gewicht nach dem gemessenen Prozentsatz der Warmschrumpfung des fraglichen Faserflors eingestellt werden (es sei angemerkt, daß der Faserflor nicht immer 100% Verbundfasern enthält). Es versteht sich, daß eine derartige Einstellung nicht präzise erfolgen muß.

Anschließend werden die warmverschweißten Punkte ausschließlich innerhalb der jeweiligen warmverschweißten Zonen, die über den Faserflor verteilt sind, gebildet. Genauer gesagt werden die Abschnitte des Vliesstoffes, die von einer Vielzahl von über den Faserflor verstreuten Stellen bestimmt sind und jeweils eine Fläche von 0,007 cm² bis 0,8 cm² und bezüglich der gesamten Oberfläche des Faserflors eine Gesamtfläche von 10 bis 40 % haben, einer Pressbehandlung bei einer Warmschweißtemperatur unterzogen, um die gewünschte Punktschweißung zu erzielen. Die Warmschweißtemperatur ist eine Temperatur im Bereich von einem Erweichungspunkt der Komponente mit niedrigem Schmelzpunkt der den Faserflor bildenden Verbundfaser bis zu einer um 5°C über dem Schmelzpunkt dieser Komponente mit niedrigem Schmelzpunkt liegenden Temperatur. Die vorliegende Erfindung bedient sich des Vicat Erweichungspunktes, der unter einer Last von 1 kgf gemäß JIS K 6758 (Prüfverfahren für Polypropylen) bestimmt wird, als Erweichungspunkt, und der Temperatur an einem Peak einer von einem differentiellen Abtastcalorimeter geplotteten endothermen Kurve als Schmelzpunkt. Die Verteilung der Schweißpunkte ist vorzugsweise so gewählt, daß die vorstehenden Erfordernisse (Fläche jedes Punktes und deren Gesamtverhältnis zur gesamten Oberfläche des Faserflors (%)) erfüllt sind und bei einem aus kurzen Fasern bestehenden Faserflor jede der kurzen Fasern möglichst zwei oder mehr Stellen überspannt, z.B. können jeweils zwei benachbarte Stellen einen Mittenabstand haben, der 1/10 bis 1/3 der durchschnittlichen Länge der Stapelfasern entspricht. Auch bei einem aus Endlosfasern bestehendem Faserflor ist es bevorzugt, daß der Mittenabstand der Stellen in Abhängigkeit der spezifischen Anwendung unter den Gesichtspunkten der Formhalteeigenschaften und der Festigkeit des Faserflors gewählt wird.

Die Bildung der warmverschweißten Punkte in einem vorgegebenen Verteilungsmuster kann durch verschiedene Verfahren erzielt werden. Gemäß eines dieser Verfahren wird ein Formwerkzeug mit Stempeln, die in Fläche und Verteilung den jeweiligen Stellen entsprechen, auf Warmschweißtemperatur aufgeheizt und gegen den Faserflor gepreßt. Dieses Verfahren ist für einen Faserflor mit einem Gewicht von 10 bis 50 g/m² bevorzugt. Fig. 1 bis 3 zeigen als Beispiel, wie die Spitzenflächen 1a der jeweiligen Stempel in verschiedenen Verteilungen (Mustern) angeordnet sind. Es versteht sich, daß die jeder Figur zugeordnete Prozentzahl (%) ein Verhältnis der Gesamtfläche der Stellen zur gesamten Oberfläche des Formwerkzeugs angibt (diese Prozentzahlen entsprechen ebenfalls dem jeweiligen Verhältnis der Gesamtfläche der Stellen zur gesamten Oberfläche des Faserflors, da die Oberfläche des Formwerkzeugs der Oberfläche des Faserflors entspricht). Fig. 4 und 5 zeigen Beispiele von Verteilungsmustern, bei denen die jeweiligen Verhältnisse der Gesamtfläche der Stellen zur gesamten Oberfläche des Faserflors von dem vorstehend bezeichneten annehmbaren Bereich abweichen. In Fig. 1 bis 5 hat die Spitzenfläche 1a jedes Stempels die Form eines Kreises mit dem Radius . Die Kreise sind dergestalt verteilt, daß der Mittelpunkt jedes Kreises an einer Ecke eines imaginären Quadrats liegt, das durch unterbrochene Linien dargestellt ist. Tabelle 1 zeigt den Radius , den Mittenabstand zwischen zwei benachbarten Kreisen und einen Flächenprozentsatz, der von den Kreisen an einem Formwerkzeug in jeder Figur erfaßt wird. Ein derartiges Formwerkzeug kann auf eine Warmschweißtemperatur aufgeheizt werden und gegen den Faserflor gepreßt werden, um die den jeweiligen Stempeln gegenüberliegend angeordneten Bereiche des Faserflors zu erwärmen und dadurch innerhalb der entsprechenden Warmschweißzonen die gewünschten warmverschweißten Punkte zwischen den Fasern zu erzeugen. Ein dem Formwerkzeug während des Preßvorgangs erteilter übermäßiger Druck würde zu einer derartigen Vergrößerung der jeweiligen warmverschweißten Punkte führen, daß jede der zugehörigen warmverschweißten Zonen zu einer Masse verhärtet und der Griff entsprechend verschlechtert würde. Um dies zu vermeiden, muß ein geeigneter Druck auf der Basis wiederholter Versuche bestimmt werden. Um die Bildung der warmgeschweißten Punkte unter Verwendung eines derartigen Formwerkzeugs in kontinuierlicher Weise durchzuführen, ist es bevorzugt, als Formwerkzeug eine Warmprägeschweißvorrichtung mit einer Prägewalze zu verwenden, die über ihren Umfang mit in einem vorgegebenen Muster verteilten Stempeln versehen ist. Nach dem Entfernen der Stempel vom Faserflor kann der Faserflor zur Stabilisierung der jeweiligen warmgeschweißten Punkte gekühlt werden.

**TABELLE 1**

| Verteilungsmuster der Spitzenfläche 1a in Fig. 1 - 5 | | | |
|---|---|---|---|
| | Radius r (mm) | Abstand (mm) | erfaßte Fläche (%) |
| Fig. 1 | 1,0 | 5 | 12,6 |
| Fig. 2 | 1,25 | 5 | 19,6 |
| Fig. 3 | 1,75 | 5 | 38,5 |
| Fig. 4 | 0,67 | 5 | 5,6 |
| Fig. 5 | 2 | 5 | 50,3 |

Das andere Verfahren zur Bildung der warmverschweißten Punkte verwendet eine Ultraschalleinrichtung und ist für ein Gewicht pro Flächeneinheit von im Bereich von 50 bis 200 g/m² geeignet. Dieses Verfahren bedient sich einer Ultraschallschweißvorrichtung, die eine mit Stempeln 1 versehene Walze 2 umfaßt, wobei die Stempel in Fläche und Verteilung den jeweiligen Punkten entsprechen, sowie ein Ultraschallhorn 3 aufweist, dessen Hornspitze nahe an der Walze 2 positioniert ist, wie Fig. 6 zeigt, so daß der Faserflor 4 zwischen der umlaufenden Walze 2 und dem Horn 3 durchläuft. Das Horn 3 wird mit einer Frequenz im Bereich von 20 000 Hz betrieben, um den gegen die Stempel 1 gepreßten Faserflor zu erwärmen und gleichzeitig innerhalb der jeweiligen Warmschweißzonen warmverschweißte Punkte zu bilden. Nach der Bildung der warmverschweißten Punkte kann der Faserflor 4 gekühlt werden, um die warmverschweißten Punkte zu härten.

Der in vorstehend beschriebener Weise mit warmverschweißten Punkten versehene Faserflor wird anschließend auf eine Kräuseltemperatur erwärmt, um die dreidimensionale Kräuselung zu entwickeln. Die Kräuseltemperatur ist eine unter dem Schmelzpunkt der Komponente mit niedrigem Schmelzpunkt der den Faserflor bildenden Verbundfaser liegende Temperatur. Allgemein wird eine um 5 bis 20°C unter dem Schmelzpunkt liegende Temperatur verwendet. Als Ergebnis einer derartigen Wärmebehandlung entwickelt sich in der Verbundfaser die dreidimensionale Kräuselung und die scheinbare Länge der Faser wird entsprechend geschrumpft. Trotz dieses Schrumpfens sind im wesentlichen alle einzelnen Verbundfasern an zwei oder mehr Punkten mit einem Abstand, der dem Mittenabstand der Warmschweißzonen entspricht, miteinander warmverschweißt, und die Schrumpfung der scheinbaren Länge jeder Faser führt zu einer gleichförmigen Schrumpfung des gesamten Vlieses, ohne daß von einem derartigen Wirrfaservlies einzelne Fasern abfallen. Darüber hinaus lösen sich die vor der Entwicklung der Kräuselung gebildeten warmverschweißten Punkte auch während dieses Schrumpfungsvorgangs nicht, da die vorliegende Erfindung jedem der warmverschweißten Punkte eine große Fläche und gute Festigkeit zuteilt, die ausreicht, dem Schrumpfungprozess zu widerstehen. Aus diese Weise wird der erfindungsgemäße elastische Polyolefinvliesstoff hergestellt.

Nachfolgend werden die hoch kräuselbaren und warmverschweißbaren Polyolefinverbundfasern genauer beschrieben. Wie bekannt ist, wird diese Polyolefinfaser aus zwei Arten von Polyolefinkunststoffen bzw.-harzen hergestellt, die einen um 10°C oder mehr unterschiedlichen Schmelzpunkt aufweisen und in einer parallelen oder einer exzentrischen Hülle/Kern-Beziehung verbunden werden. In letzterem Fall ist die Hüllkomponente aus dem Harz mit niedrigerem Schmelzpunkt gebildet. Der hierin verwendete Ausdruck "hoch kräuselbar" entspricht in seiner Bedeutung der vorstehenden Erläuterung.

Die Komponente mit hohem Schmelzpunkt kann aus einer Gruppe von Polypropylenpolymeren wie etwa kristallines Polypropylen, Propylen-Ethylen-Copolymer, Propylen-Buten-1-Copolymer oder Propylen-Ethylen-Buten-1-Copolymer ausgewählt sein. Die Komponente mit niedrigem Schmelzpunkt kann ein Polymer mit einem Schmelzpunkt sein, der wenigstens 10°C unter dem der Komponente mit hohem Schmelzpunkt liegt, vorzugsweise jedoch um wenigstens 20°C. Der Grund dafür, daß ein um 10°C oder mehr unterschiedlicher Schmelzpunkt sichergestellt sein muß ist der, daß hinsichtlich des bei einer Temperatur im Bereich vom Erweichungspunkt der Komponente mit niedrigem Schmelzpunkt bis zu einer um 5°C über dem Schmelzpunkt dieser niedrigschmelzenden Komponente stattfindenden Warmschweißprozesses ein um weniger als 10°C unterschiedlicher Schmelzpunkt zu einer unerwünschten Erweichung der Komponente mit hohem Schmelzpunkt aufgrund der Erwärmung für das Warmschweißen führen könnte und es erschweren könnte, die gewünschte dreidimensionale Kräuselung beizubehalten. Ein derartige hoch kräuselbare und warmschweißbare Verbundfaser wird in einem nachfolgend erläuterten Prozess hergestellt. In einer Verbundspinnmaschine wird eine Spinndüse so eingestellt, daß ein Zweikomponentenfaden mit paralleler oder mit exzentrischer Hülle/Kern-Beziehung der als Hauptwerkstoffe verwendeten gesponnenen Polyolefinharze gebildet wird. Der Faden wird unmittelbar nach dem Spinnen unter bestimmten Streckbedingungen verstreckt, die so gewählt sind, daß der erzielte verstreckte Faden die gewünschten hoch kräuselbaren Eigenschaften haben kann. Typischerweise wird eine derartige hohe Kräuselbarkeit durch ein Verstrecken um das 1,5 - 4fache bei relativ niedriger Temperatur erzielt. Diesem Verstreckprozess kann, falls erforderlich, ein gemäßigter Kräuselprozess unter Verwendung eines mechanischen Kräuselungsverfahrens o.ä. und anschließend ein Trocknungsprozess folgen (falls es sich um Stapelfasern handelt, wird auch ein Schneidprozess vorgesehen sein), um die zur Verwendung gemäß vorliegender Erfindung vorgesehene Verbundfaser herzustellen. Es ist offenbar, daß die im gemäß vorliegender Erfindung aufgebauten Vliesstoff vorliegende Verbundfaser den vorstehend beschriebenen Aufbau aufweist sowie die darin entwickelte dreidimensionale Kräuselung und die in verstreuter Verteilung ausgebildeten warmverschweißten Punkte.

Der hierin verwendete Ausdruck "andere organische Fasern" bezeichnet organische Fasern, wie etwa Baumwolle, Flachs, Viskosefilament, Polyamid oder Polyester, die durch Erwärmung bei der während des Warmschweißprozesses herrschenden Temperatur nicht ohne weiteres veränderbar sind. Derartige organische Fasern können in einem Mischungsverhältnis von weniger als 70 Gew.-% mit der hoch kräuselbaren, warmverschweißbaren Polyolefinverbundfaser verwendet werden, um den Griff, die Wasseraufnahmefähigkeit und andere Eigenschaften der geplanten Produkte zu verbessern. Eine Beimischung der organischen Fasern in einem 70 Gew.-% übersteigenden Verhältnis würde den Warmschrumpfungsgrad des Faserflors verringern, die Elastizität des erzielten Vliesstoffes ungenügend werden lassen und die Anzahl der warmverschweißten Punkte verringern, was eine verminderte Festigkeit des Vliesstoffes zur Folge hätte.

Der gemäß der vorliegenden Erfindung vorgeschlagene elastische Polyolefinvliesstoff ist im wesentlichen aus Polyolefinverbundfasern mit einem hohen Kräuselungsgrad zusammengesetzt und enthält ausschließlich innerhalb der jeweiligen Warmschweißzonen ausgebildete warmverschweißte Punkte, die in einem stellen- bzw. fleckartigen Muster über den Vliesstoff verteilt sind. Die warmverschweißten Punkte wurden vor der Entwicklung der Kräuselung gebildet. Demgemäß werden die einzelnen Verbundfasern an relativ wenigen Punkten, aber in zuverlässiger Weise verschweißt, so daß die der dreidimensionalen Kräuselung eigene Elastizität zur hohen Elastizität, zum hervorragenden Griff und zu einer für den praktischen Gebrauch ausreichenden Festigkeit des Vliesstoffes beiträgt.

### KURZE BESCHREIBUNG DER ZEICHNUNGEN

Fig. 1 bis 5 zeigen jeweils als Beispiel Verteilungsmuster ster der Stempel auf den jeweiligen Formwerkzeugen, und
Fig. 6 zeigt eine schematische Darstellung einer zur Herstellung des Vliesstoffes verwendeten Ultraschallschweißvorrichtung.

### BEVORZUGTE AUSFÜHRUNGSFORM DER ERFINDUNG

Die vorliegende Erfindung wird nachfolgend im Detail unter Bezug auf Ausführungsformen und Vergleichsausführungsformen beschrieben.

### [1] Drei Arten von Verbundfasern, die sowohl in den Ausführungsformen als auch in den Vergleichsausführungsformen verwendet werden:

Die jeweiligen Arten von Verbundfasern in Tabelle 2 umfassen kurze Verbundfasern mit 2,2 dtex (2 Denier) und 51 mm Länge. Die jeweiligen Arten von Verbundfasern wurden durch Spinnen der entsprechenden beiden Arten von Ausgangskunststoffen, wie in Tabelle 2 aufgeführt, in paralleler Beziehung mit einem Mischverhältnis von 50 : 50 und anschließendem Verstrecken des Fadens unmittelbar nach dem Spinnvorgang bei einer Verstrecktemperatur von 80°C und einem Verstreckungsfaktor von 2,7 erhalten. Ausgangskunststoffe und Warmschrumpfungsgrad sind ebenfalls in Tabelle 2 angegeben.

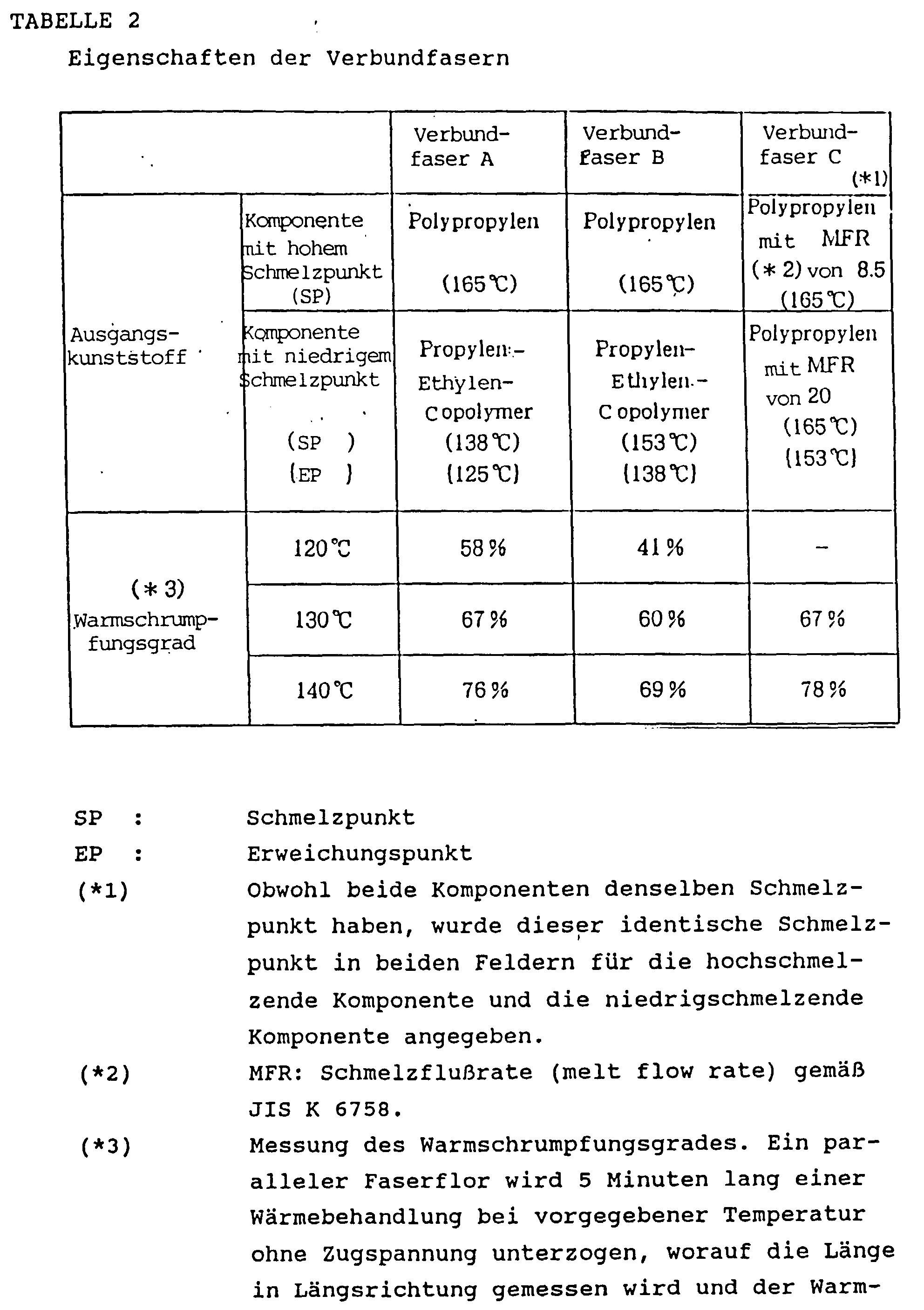

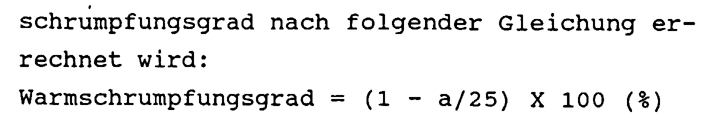

### [2] Herstellung des Vliesstoffes:

Faserflorproben wurden aus unabhängigen oder gemischten Fasern mit den in Tabelle 3 angegebenen Ausgangsstoff-Faserzusammensetzungen und Gewichten pro Flächeneinheit unter Verwendung einer Flachkarde gebildet. Diese Faserflorproben wurden, wie in Tabelle 3 angegeben, einem Warmschweißprozess unterzogen (in Tabelle 3 sind die Verteilungsmuster der Stempelspitzen auf den zugehörigen Formwerkzeugen mit der Nummer der entsprechenden Figur bezeichnet), um innerhalb der jeweiligen Warmschweißzonen am Faserflor warmverschweißte Punkte zu bilden. Bei Verwendung einer Schweißvorrichtung des Warmprägetyps wurden die Stempel 1a auf die in Tabelle 2 angegebene Temperatur erwärmt. Anschließend wurde der geprägte Faserflor fünf Minuten lang in einer Trockeneinrichtung mit einem Warmluftstrom bei einer um 10°C unter dem Schmelzpunkt der Komponente mit niedrigem Schmelzpunkt der Verbundfaser liegenden Temperatur erwärmt, um eine Kräuselung zu entwickeln und dadurch einen gewünschten Vliesstoff zu bilden.

Griff, Festigkeit und elastischer Rückformungsgrad der Dehnung des erhaltenen Vliesstoffes wurden durch die nachfolgend beschriebenen Verfahren bewertet.

### Griff:

Eine Tastprüfung wurde von fünf Prüfern durchgeführt, wobei der Griff mit AAA bewertet wurde, wenn alle Prüfer ihn als weich beurteilten, mit AA, wenn drei oder mehr Prüfer ihn als weich beurteilten, und mit A, wenn drei oder mehr Prüfer die Weichheit als mangelhaft beurteilten.

### Festigkeit (in Längsrichtung):

Gemäß JIS L 1096 (allgemeines Prüfverfahren für Textilien) wurde die Messung an einer Probe mit einer Breite von 5 cm und einer Länge von 20 cm mit einem Rückhalteabstand von 10 cm und einer Zuggeschwindigkeit von 10 cm/min durchgeführt. Die Festigkeit wurde in kg/5 cm Breite ausgedrückt.

Bei der vorliegenden Erfindung ist ein Vliesstoff mit einer Festigkeit von 2 kg/5 cm Breite für die praktische Anwendung geeignet.

### Elastischer Rückformungsgrad der Dehnung:

Gemäß JIS L 1096 (Elastizität von Stretch-Textilien nach dem allgemeinen Prüfverfahren für Textilien) wurde nach der Dehnung einer Probe mit einer Breite von 5 cm und einer Länge von 20 cm um 12 cm mit einem Rückhalteabstand von 10 cm und einer Zuggeschwindigkeit von 10 cm/min und der Aufrechterhaltung dieses Zustandes für eine Minute die Probe mit einer der Zuggeschwindigkeit entsprechenden Geschwindigkeit in ihren ursprünglichen Zustand zurückversetzt, anschließend entlastet und für drei Minuten in diesem entlasteten Zustand belassen. Daraufhin wurde die Länge (Lcm) gemessen und die Berechnung gemäß folgender Gleichung durchgeführt:$\text{Elastischer Rückformungsgrad der Dehnung} \text{= (12 - L)/2 X 100 (%)}$

Gemäß der vorliegenden Erfindung ist ein elastischer Rückformungsgrad der Dehnung von 90% oder mehr ausreichend.

Die Ergebnisse sind in Tabelle 3 gezeigt.

Wie aus Tabelle 3 ersichtlich ist, weisen die jeweiligen Ausführungsformen (Ex. 1 - 10), die allen in der vorliegenden Erfindung festgelegten Erfordernissen gerecht werden, einen hervorragenden Griff und elastischen Rückformungsgrad der Dehnung auf und sind gleichermaßen auch im Hinblick auf die Festigkeit wenigsten für die praktische Verwendung geeignet, während die jeweiligen Vergleichsproben (Vergleich 1 - 5), die wenigstens eine dieser Anforderungen nicht erfüllen, hinsichtlich der vorstehend genannten Eigenschaften ungeeignet sind.

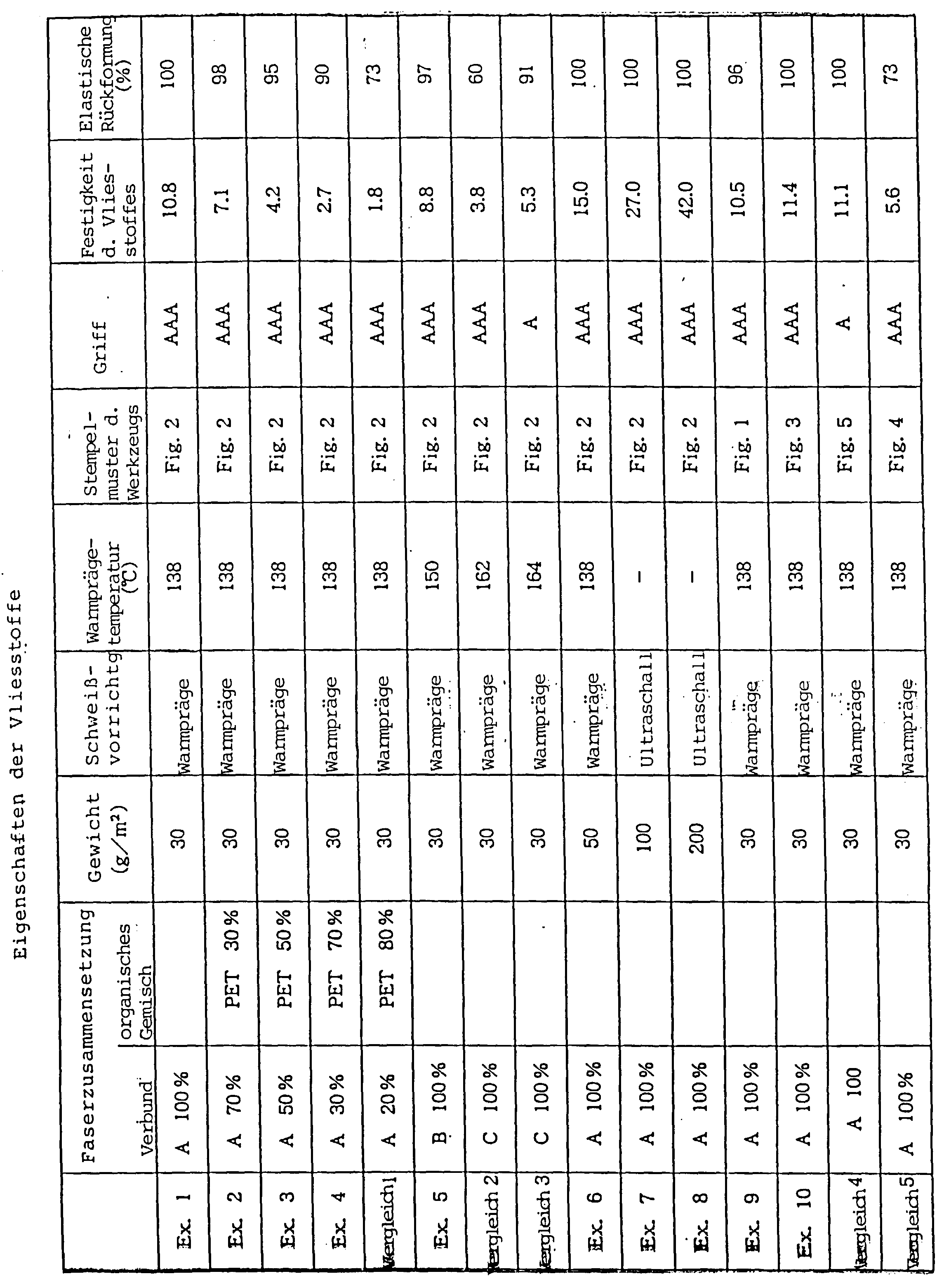

## Patentansprüche

1. Elastischer Polyolefinvliesstoff, zusammengesetzt aus Polyolefinfasern oder aus derartigen Fasern im Gemisch mit anderen organischen Fasern, wobei der Vliesstoff einer Warmschweißbehandlung unterzogen ist und an vordefinierten Stellen punktweise verschweißt ist, **dadurch gekennzeichnet,** daß die Polyolefinfasern kräuselfähige Polyolefinverbundfasern sind und bei einem Fasergemisch der Anteil der Verbundfasern mindestens 30 Gewichts-% beträgt, daß die Verbundfasern eine dreidimensionale Kräuselung aufweisen, und daß die Punkte jeweils eine Fläche von 0,007 cm² bis 0,8 cm² aufweisen und so über den Vliesstoff verteilt sind, daß sie eine Gesamtfläche von 10% bis 40 % bezüglich der Oberfläche des Vliesstoffes aufweisen.

2. Elastischer Polyolefinvliesstoff nach Anspruch 1,
**dadurch gekennzeichnet,** daß das Gewicht pro Flächeneinheit des Vliesstoffes in einem Bereich von 10 bis 200 g/m² liegt.

3. Elastischer Polyolefinvliesstoff nach Anspruch 1,
**dadurch gekennzeichnet,** daß jedes Paar von benachbarten Stellen einen Mittenabstand aufweist, der 1/10 bis 1/3 der durchschnittlichen Länge der Verbundfasern entspricht.

4. Verfahren zum Herstellen eines elastischen Polyolefinvliesstoffes, bestehend aus warmverschweißbaren Polyolefinfasern oder aus derartigen Fasern im Gemisch mit anderen organischen Fasern, die durch Verschweißen an vorbestimmten Punkten zu einem Faserflor zusammengefügt sind, **dadurch gekennzeichnet,** daß die Polyolefinfasern aus kräuselfähigen Polyolefinverbundfasern bestehen, die in dem Fasergemisch mit wenigstens 30 Gewichts-% enthalten sind, und in dem die Komponente mit niedrigem Schmelzpunkt und die Komponente mit hohem Schmelzpunkt in paralleler Beziehung zueinander oder in einer exzentrischen Hülle-und-Kern-Beziehung verbunden sind und die Punkte zum Verschweißen so über dem Faserflor verteilt sind, daß jeder der Punkte 0,007 cm² bis 0,8 cm² aufweist und eine Gesamtfläche von 10 bis 40% der Oberfläche des Faserflors ausmacht; und wobei das Verschweißen des Faserflors an den jeweiligen Stellen bei einer Temperatur im Bereich von einem Erweichungspunkt bis zu einer um 5°C über dem Schmelzpunkt der Komponenten mit niedrigem Schmelzpunkt, mit der die Verbundfaser zusammengesetzt ist, liegt, und daß anschließend eine Wärmebehandlung des Faserflors bei einer Temperatur, die unter dem Schmelzpunkt der Komponente mit niedrigem Schmelzpunkt liegt, durchgeführt wird, wodurch eine dreidimensionale Kräuselung der Verbundfasern entwickelt wird.

5. Verfahren zur Herstellung eines elastischen Polyolefinvliesstoffes nach Anspruch 4, wobei der Schritt des Verschweißens durch Aufpressen eines Prägewerkzeuges mit Stempeln, die sowohl in ihrer jeweiligen Fläche als auch in ihrer Verteilung den jeweiligen Stellen entsprechen und die auf die Temperatur im Bereich vom Erweichungspunkt bis zu der um 5°C über dem Schmelzpunkt der Komponente mit niedrigem Schmelzpunkt, mit der die Verbundfaser zusammengesetzt ist, liegenden Temperatur aufgeheizt sind.

6. Verfahren zur Herstellung eines elastischen Polyolefinvliesstoffes nach Anspruch 5, wobei als Prägewerkzeug mit Stempeln eine Prägewalze verwendet wird.

7. Verfahren zur Herstellung eines elastischen Polyolefinvliesstoffes nach Anspruch 4, wobei der Schritt des Verschweißens durch das Durchlaufen des Faserflors zwischen einer umlaufenden Walze, an deren Umfang Stempel angebracht sind, die sowohl in ihrer jeweiligen Fläche als auch in ihrer Verteilung den jeweiligen Stellen entsprechen, und einem Ultraschallhorn, dessen Hornspitze nahe an der Walze positioniert ist, durchgeführt wird.

8. Verfahren zur Herstellung eines elastischen Polyolefinvliesstoffes nach Anspruch 4, wobei der Faserflor an den jeweiligen Stellen warmverschweißt wird, die in der Weise angeordnet sind, daß jedes Paar von benachbarten Stellen einen Mittenabstand hat, der 1/10 bis 1/3 der durchschnittlichen Länge der Verbundfasern entspricht.

## Claims

1. Elastic nonwoven polyolefin fabric composed of polyolefin fibres or of such fibres mixed with other organic fibres, the nonwoven fabric being subjected to a heat-welding treatment and welded intermittently at predetermined places,
**characterised in that**
the polyolefin fibres are crimpable polyolefin composite fibres and, where the fibres are mixed, the proportion of composite fibres amounts to at least 30% of the weight, in that the composite fibres have a three-dimensional crimp and in that the welding points each have an area of 0.007 cm² to 0.8 cm² and are distributed over the nonwoven fabric in such a way that they have a total area of 10% to 40% of the surface of the nonwoven fabric.

2. Elastic nonwoven polyolefin fabric according to claim 1,
**characterised in that**
the weight per surface unit of the nonwoven fabric lies in a region of 10 to 200 g/m².

3. Elastic nonwoven polyolefin fabric according to claim 1,
**characterised in that**
the distance from centre to centre of each pair of neighbouring points corresponds to 1/10 to 1/3 of the average length of the composite fibres.

4. Method of manufacturing an elastic nonwoven polyolefin fabric consisting of polyolefin fibres which can be heat-welded or of such fibres mixed with other organic fibres, which are joined together by welding at predetermined points to make a fibrous web,
**characterised in that**
the polyolefin fibres consist of crimpable polyolefin composite fibres, which are contained in a fibre mixture with at least 30% of the weight, and in which [web] the components with a low melting point and the components with a high melting point are joined together in parallel or in an eccentric casing and core relationship and the points to be welded are distributed over the fibrous web in such a way that each of the points is 0.007 cm² to 0.8 cm² and makes a total area of 10% to 40% of the surface of the fibrous web; and in which the welding of the fibrous web at the respective places lies at a temperature in the region of a softening point up to a temperature of 5°C above the melting point of the components with the low melting point, with which temperature the composite fibre is put together, and in that a heat treatment of the fibrous web is then carried out at a temperature which lies below the melting point of the components with a low melting point and in this way a three-dimensional crimp of the composite fibres is developed.

5. Method of manufacturing an elastic nonwoven polyolefin fabric according to claim 4, in which the step of welding [is carried out] through pressing on a stamping tool with dies, which correspond in their respective area and in their distribution to the corresponding points and which are heated up to the temperature in the region of the softening point up to the temperature lying at 5°C above the melting point of the components with a low melting point, with which temperature the composite fibre is put together.

6. Method of manufacturing an elastic nonwoven polyolefin fabric according to claim 5, in which a stamping roller is used as stamping tool with dies.

7. Method of manufacturing an elastic nonwoven polyolefin fabric according to claim 4, in which the step of welding is carried out by running the fibrous web between a circulating roller, to the circumference of which dies are attached, which both in their respective area and in their distribution correspond to the respective places, and an ultrasonic horn, the tip of which is positioned close to the roller.

8. Method of manufacturing an elastic nonwoven polyolefin fabric according to claim 4, in which the fibrous web is heat welded at the respective places which are arranged in such a way that the distance from centre to centre of each pair of neighbouring places corresponds to 1/10 to 1/3 of the average length of the composite fibres.

## Revendications

1. Non tissé de polyoléfines élastique, composé de fibres de polyoléfines ou de fibres de ce genre mélangées à d'autres fibres organiques, le non tissé étant soumis à un traitement de thermosoudage et soudé par points à des emplacements définis au préalable, caractérisé en ce que les fibres de polyoléfines sont des fibres compound de polyoléfines aptes au crêpage et qu'en cas de mélange de fibres, la part des fibres compound est d'au moins 30 % en poids, en ce que les fibres compound présentent un crêpage tridimensionnel, et en ce que les points présentent, respectivement, une superficie de 0,007 cm² à 0,8 cm², et sont distribués sur le non tissé de façon à occuper une surface totale de 10 à 40 % par rapport à la surface du non tissé.

2. Non tissé de polyoléfines élastique selon la revendication 1, caractérisé en ce que le poids du non tissé par unité de surface est de l'ordre de 10 à 200 g/m².

3. Non tissé de polyoléfines élastique selon la revendication 1, caractérisé en ce que deux points voisins présentent un entraxe correspondant à une valeur comprise entre 1/10 et 1/3 de la longueur moyenne des fibres compound.

4. Procédé de production d'un non tissé de polyoléfines élastique, composé de fibres de polyoléfines thermosoudables ou de fibres de ce genre mélangées à d'autres fibres organiques, assemblées par soudage à des emplacements définis au préalable, pour former un voile de fibres, caractérisé en ce que les fibres de polyoléfines comprennent des fibres de polyoléfines compound aptes au crêpage, lesquelles sont présentes dans le mélange de fibres à raison d'au moins 30 % en poids, procédé dans lequel les composants à bas point de fusion et les composants à point de fusion élevé sont réunis dans un rapport parallèle ou dans un rapport enveloppe et noyau excentrique, et les points de soudage sont répartis sur le voile de fibres de façon à ce que chaque point présente une superficie de 0,007 cm² à 0,8 cm² et occupe une surface totale de 10 à 40 % de la surface du voile de fibres; procédé dans lequel le soudage du voile de fibres est exécuté aux divers emplacements à une température située dans un intervalle allant d'un point de ramollissement jusqu'à 5° au-dessus du point de fusion des composants à bas point de fusion dont est composée la fibre compound, et dans lequel on exécute ensuite un traitement thermique du voile de fibres à une température inférieure au point de fusion des composants à bas point de fusion, ce qui produit un crêpage tridimensionnel des fibres compound.

5. Procédé de production d'un non tissé de polyoléfines élastique selon la revendication 4, dans lequel l'opération de soudage est exécutée par pression d'un outil d'estampage pourvu de poinçons correspondant aux divers emplacements de points quant à leur surface et à leur distribution, et chauffés à la température allant du point de ramollissement à la température supérieure de 5° au point de fusion des composants à bas point de fusion dont est composée la fibre compound.

6. Procédé de production d'un non tissé de polyoléfines élastique selon la revendication 5, dans lequel on utilise un cylindre d'estampage comme outil d'estampage garni de poinçons.

7. Procédé de production d'un non tissé de polyoléfines élastique selon la revendication 4, dans lequel l'opération de soudage est exécutée par passage du voile de fibres entre un cylindre rotatif, dont la périphérie porte des poinçons qui correspondent, quant à leur surface et à leur distribution, aux divers emplacements de points, et une aiguille de soudage par ultrasons, dont la pointe est positionnée à proximité du cylindre.

8. Procédé de production d'un non tissé de polyoléfines élastique selon la revendication 4, dans lequel le voile de fibres est soudé par chaleur aux divers emplacements de points, qui sont agencés de façon à ce que chaque paire d'emplacements voisins présente un entraxe correspondant à une valeur comprise entre 1/10 et 1/3 de la longueur moyenne des fibres compound.
